# EUROPEAN PATENT APPLICATION

(11) **EP 1 352 729 A1**
(43) Date of publication of application: **15.10.2003**
(21) Application number: 02425210.8
(22) Date of filing: 08.04.2002
(51) Int. Cl.: B29C 47/50

(54) **Screw extruder with discharge pump**

(71) Applicant: COLMEC S.p.A., 20020 Vanzaghello (Milano) (IT)
(72) Inventor: Colombo, Ubaldo, 21052 Busto Arsizio (Varese) (IT)
(74) Representative: Faggioni, Carlo Maria, Dr. Ing.

(57) **Abstract**

A screw extruder with pump, of the type comprising a housing channel (C) of a worm (V), at the outlet of which is placed a discharge pump (P) for the extrusion plastic material coming out of said channel (C) is disclosed. A passage channel (1) for the extrusion material, inside said pump (P), is arranged in a direction perpendicular to the axis of said housing channel (C) of the worm (V), with a parallelepiped block (3) interposed, in a removable portion of which (4e) a connecting duct (4) is formed. The pump (P) is made to rotate by the same driving motor (M) of the worm (V) through a kinematic chain comprising a gear pair (6, 7) and a joint (9).

## Description

The present invention relates to a screw extruder with a discharge pump. In particular, the invention relates to an extruder of this type which has advantageous improvements as regards the motorisation of the moving parts and the methods for assembling/disassembling thereof in order to carry out cleaning operations of the extruder.

Apparatus of this type are frequently used to preheat and homogenise the extrusion material before it is directed to a processing machine, for example an extrusion die. Materials suitable for treatment in such extruders are thermoplastic materials and elastomeric materials, in particular rubbers.

Extruders currently on the market comprise essentially a rectilinear cylindrical channel inside which a worm is housed, normally of the variable pitch type, made to rotate by a gear motor connected to its rear end, and coaxial therewith. The worm has very little radial play with respect to the walls of the cylindrical channel, so as to reduce to a minimum the blow-by of material between the crests of the worm and said walls, though allowing for the regular axial rotation of the worm. A side opening in the channel is provided to allow the insertion therein of the solid material in beads or strips, while the desired temperature inside the channel, necessary to determine the plastication of the material, is obtained by means of an external pipe, inside which flows a fluid thermal carrier at a proper temperature. Finally, on the extension of said channel, and before the front end of said worm, a gear pump is placed, which draws the plastic material from the screw cylinder and feeds it along the same axis to the processing machine at a predefined rate. The rotation of the gears of said pump takes place, as above stated, about an axis perpendicular to the axis of the worm and the pump is made to rotate by an associated electrical motor, independent of the worm motor.

The known apparatus of the type illustrated above, though being satisfactorily functional, suffer from some problems, as it will be better described hereinafter.

A first problem is determined by the presence of the two different electrical driving motors, respectively that of the worm and that of the gear pump. This double motorization, which is, however, indispensable, considering the orthogonal lie of the axes of the two driven elements, causes added costs and volumes, and it also requires that the rotation speeds of the two motors be controlled, in order to achieve the necessary coordination between the extruder flow rate and the gear pump flow rate.

A second problem is connected with the extruder cleaning activities, which must be performed at each variation of the material processed, as well as at each interruption of the apparatus operation. In order to perform the cleaning of the extruder, it is necessary to disassemble the gear pump and its associated motor, so as to gain access to the inside of the gear pump and the outlet of the worm housing channel as well as, when needed, to be able to withdraw the extruder worm itself. Such operation, as it is understandable, is neither easy nor quick; therefore, the need for an apparatus which is able to simplify and speed up these operations is strongly felt in the field, to allow a better productivity of the apparatus and an easier performance of the cleaning activities also by non-skilled labour.

The object of the present invention is therefore that of providing a screw extruder with pump which proves to be free of the problems recalled above, and namely an extruder in which motion to all moving parts may be provided by a single motor and, furthermore, in which the cleaning of the apparatus and the extraction of the worm may be performed without the need to disassemble the gear pump.

Such objects are achieved, according to the present invention, by means of a screw extruder with pump of the type illustrated above, having the innovative features reported in claim 1).

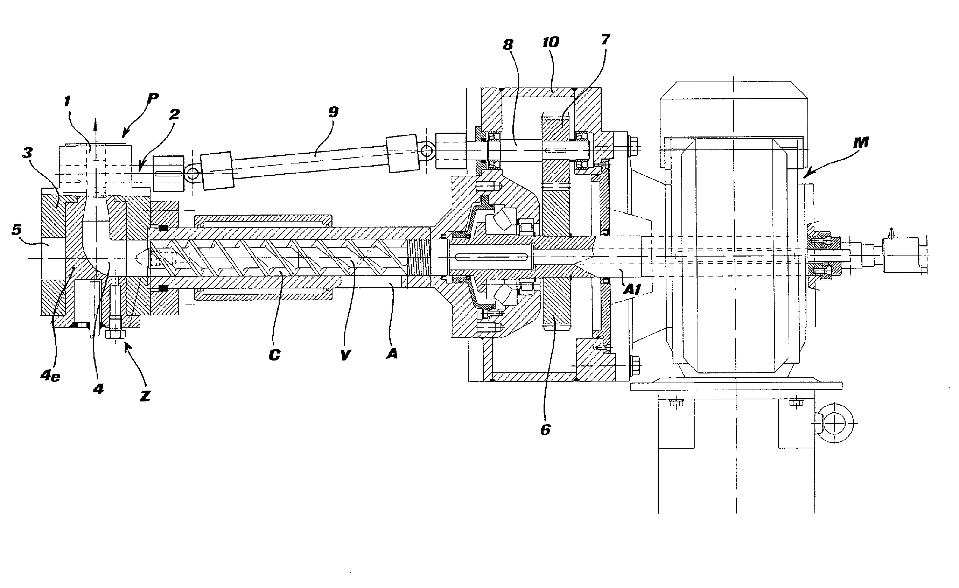

Further features and advantages of the present invention will however be better outlined by the following detailed description of a preferred embodiment thereof, with reference to the accompanying drawing, which represents a partial section elevation view of an extruder with pump according to the present invention.

As it is clearly seen in the drawing, the extruder with pump according to the present invention first of all comprises, as it is traditional, an extruder portion constituted by a variable pitch worm V, housed within a made-to-measure cylindrical channel C. Said channel C is provided with an opening A for the introduction of the material in beads or strips, and a suitable thermoregulation circuit in which a fluid thermal carrier flows, which heats the extruder to the desired temperature. The rotating movement is provided to the worm V by a gear motor M, coaxial with the worm V and joined to the rear end thereof by means of a thrust bearing joint device connected to a driving shaft A1, an arrangement well-known per se, whose detailed description is not provided here.

According to the main feature of the invention, a gear pump P, which performs the controlled discharge of the melted material, is arranged in such a manner that the related passage channel 1 of the material is not arranged, as in the extruders of the known type, in alignment with the channel C and immediately downstream of the worm V, but in a direction perpendicular, or substantially perpendicular, to the axis of said channel C. As a result, a driving shaft 2 of the pump P is parallel, or substantially parallel, to the axis of the channel C, and hence of the driving shaft A1.

This arrangement is preferably obtained by fixing at the end of the worm V a side of a parallelepiped block 3, onto another side of which, orthogonal to the first, is fixed the pump P. Inside the block 3, a union channel 4 is formed, which is apt to communicate the outlet of the channel C of the extruder with the inlet of the channel 1 of the pump P. Furthermore, in the preferred embodiment of the invention, said union channel 4 is formed inside a portion 4e of the block 3, removable from the same block in a direction parallel to the axis of the channel 1 of the pump P. Finally, the fixed portion of the block 3 has a through hole 5, placed on the axial extension of the channel C, said hole 5 having substantially the same diameter as the channel C.

Thanks to the new arrangement of the pump P, it is now possible to drive the rotation of said pump by means of the same motor M which drives the rotation of the worm V. A possible constructive arrangement of the kinematic chain implementing this driving system is illustrated in the drawing and it includes: a first gear 6 keyed to the shaft A1 of the motor M; a second gear 7 coupled to the gear 6 and keyed to a service shaft 8; a joint 9, such as an elastic or a cardan joint, which transfers the rotation of the service shaft 8 to the shaft 2 of the pump P, even in the case - as illustrated in the drawing - in which said latter shafts are misaligned. The gear pair 6 and 7 and the service shaft 8 are preferably enclosed in a usual oil bath case 10.

Preferably, the block 4e also has a shutter valve Z communicating with the union channel 4. By means of this valve Z it is possible to "spill out" material in order to reduce the pressure in the extruder, and finely adjust possible pressure differences caused by the gear ratio defined, without continuity, by the teeth number ratio of the wheels 6 and 7.

From the preceding description it should be clear how the structure of the extruder with pump according to the present invention allows full achievement of both the appointed objects.

First of all, in fact, the motorization of the entire apparatus is performed with a single motor M, simplifying the managing of the apparatus, reducing its costs and allowing to have always a constant ratio of the feeding rate of the worm V to the discharge rate of the pump P, a ratio which is only determined by the reduction ratio of the gears 6 and 7, in a manner independent of the operating conditions of the gear motor M and of the viscosity conditions of the material in the various parts of the apparatus. The first object of the invention is thus fully achieved.

Furthermore, the cleaning operations of the apparatus are considerably simplified. In fact, at the end of each process, it is sufficient to extract the removable portion 4e from the block 3 to have handy and easy access both to the pump P and to the outlet of the channel C, and, lastly, to the same union channel 4 formed inside the removable portion 4e. The shape of this portion 4e is in fact such that the outlet of the union channel 4, formed therein, ends in close proximity of the gears of the pump P, while its inlet is adjacent to the front end of the worm V, so that the areas of the apparatus to be cleaned of the material are very easily accessible.

It is also possible for the user to have various removable portions 4e, which might be different from each other in shape, so as to cope with different requirements or to be available when change is needed, in order not to incur in prolonged machine downtime.

Finally, the particular shape of the block 3, and in particular the provision of the hole 5, allows - whenever this is required by specific cleaning or maintenance operations, of course - the extraction of the worm V without having to disassemble the pump P. In fact, once the removable portion 4 has been extracted, the worm V may be pulled out without problems and very quickly through the hole 5, without even having to touch the pump P or the related driving system. Thus, also the second object of the invention has been fully achieved.

The present invention has been described with reference to some preferred embodiments thereof, but it is understood that the scope of the invention is not limited to these but comprises all those possible variations which are within the reach of a person skilled in the art, and which may be required in order to adapt the invention to the different applicative purposes, providing they are included in the definitions given in the enclosed claims.

## Claims

1. Screw extruder with pump, of the type comprising a housing channel (C) for a worm (V) driven to rotate by a motor (M), a discharge pump (P) of the extrusion plastic material being placed at the outlet of said channel (C), **characterized in that** a passage channel (1) of the material, inside said pump (P), is arranged according to a direction perpendicular or substantially perpendicular to the axis of said housing channel (C) of the worm (V).

2. Extruder as in 1), wherein said pump (P) is fixed to one side of a block (3) substantially parallelepiped, the other perpendicular side thereof being fixed to the outlet of said housing channel (C) of the worm (V), a union duct (4) being formed inside said block (3).

3. Extruder as in 2), wherein said union duct (4) is formed, at least in part, inside a removable portion (4e) of the block (3).

4. Extruder as in 3), wherein the withdrawing direction of said removable portion (4e) is parallel to the axis of said passage channel (1) of the material inside the pump (P).

5. Extruder as in 3), wherein the fixed portion of said block (3) is provided with a through hole (5) aligned with said housing channel (C) of the worm (V) and having substantially the same diameter.

6. Extruder as in any one of the preceding claims, wherein said pump (P) is made to rotate by the same motor (M) which drives the worm (V).

7. Extruder as in 6), wherein said pump (P) is a gear pump, whose rotation shaft (2) is parallel, or substantially parallel, to the shaft (A1) of the motor (M).

8. Extruder as in 7), wherein said pump (P) is connected to said motor (M) by means of a kinematic chain comprising two coupled gears (6, 7), respectively keyed to the shaft (A1) of the motor (M) and to a service shaft (8) parallel thereto and a joint (9) apt to connect said service shaft (8) to the shaft (2) of the pump (P).

9. Extruder as in 8), wherein said joint (9) is an elastic or a cardan joint.

10. Extruder as in 8), wherein the ratio of the feeding rate of the worm (V) to the discharge rate of the pump (P) is determined by the reduction ratio of said coupled gears (6, 7).

11. Extruder as in any one of the claims 2) to 10), wherein, on said block (3), a shutter valve (Z) is also provided, which is communicating with said union duct (4), and is apt to allow the spilling of extrusion material.
